# EUROPEAN PATENT APPLICATION

(11) **EP 2 131 555 A1**
(43) Date of publication of application: **09.12.2009**
(21) Application number: 08157559.9
(22) Date of filing: 04.06.2008
(51) Int. Cl.: H04L 29/08

(54) **Apparatus and method for identification of the characteristics of a communication device**

(71) Applicant: Rapid Mobile Media Ltd., Edinburgh EH2 3ES (GB)
(72) Inventor: Marshall, Richard, Edingurgh EH4 3DQ (GB); Cruse, Graham, Edinburgh EH 11 1DN (GB)
(74) Representative: Walaski, Jan Filip

(57) **Abstract**

A device identification system (106) for automatically identifying mobile devices (101) and providing data which may he used to optimise content or services to be provided to the mobile device (101). The invention provides a system for implementing a method for device identification wherein a mobile content server requests device identification from a local device identifying station (202,210,211), which attempts to find matching identification data in a locally stored repository. In the event that matching data is found, the local station transmits matching identification data to the content server; in the event that matching data is not found, the local station transmits the received data to a central identifying station (203), receives device identifying data from the central identifying station (203) and transmits the received device identification data to the server.

## Description

The invention relates to an apparatus and method for device identification, particularly but not exclusively to the identification of characteristics of mobile communication devices for use in the provision of content to the devices.

There are numerous mobile communication devices such as mobile telephones currently available on the market. Optimal presentation of content, such as media files and software applications on these devices requires accurate identification of the device, such that the content can be selected, adapted or otherwise optimised based on particular parameters of the device. These parameters can, for instance, include the screen size, the type of keyboard available, the numbers of colours that the screen can render, the type of content that can be displayed within a browser operating on the device, the type of application that may be downloaded, the codes generated by the keys on the device, whether the device has a touch-sensitive screen and many others.

The device identification process is rendered complex by the numerous manufacturers, software providers and wireless service providers involved in connecting a mobile communication device to the content source. Conventionally, device identification is achieved by requesting the owner of the mobile communications device to manually select the type of their device, for instance from an on-screen menu provided by the content source. However many users do not know the exact manufacturer and model number of their mobile communications device, information which has little importance to them, and in most cases they would have to remove the case and battery of the device to determine the required information. As a result, mobile communications device owners often select the wrong device type and receive at best suboptimal content services.

While gathering information by acquiring mobile communication devices and analysing them manually can be used to enable such devices to be identified in future, the result of this is that content provision services lag behind the most up-to-date devices which have become available on the market.

The present invention aims to address the drawbacks inherent in known arrangements.

According to the present invention, there is provided a method of identifying characteristics of a device, the device being arranged to request content from a content server, the method comprising receiving identification data generated by the device from the content server, the identification data corresponding to the device, comparing the received identification data with locally stored identification data and in response to a match between the received identification data and the locally stored identification data, providing data for use by the content server to identify characteristics of the device. The invention therefore provides a method of identifying characteristics of a device whereby automatic identification is performed based on a comparison of device identification data and accordingly errors in the identification procedure caused by users selecting an incorrect device can be greatly reduced.

The data provided for use by the content server comprises characterisation data identifying characteristics of the device.

The method may further comprise, in the event that there is not a match between the received identification data and locally stored identification data, transmitting the received identification data to a central identifying station, receiving device identifying data and device characterisation data from the central station and transmitting the received device characterisation data to the content server.

The method may further comprise, in the event that transmission to the central identifying station fails, generating device characterisation data by analysing the received identification data, storing the generated device characterisation data with the corresponding identification data and transmitting the generated device characterisation data for use by the content server.

The method may further comprise transmitting the generated device characterisation and identification data to the central identifying station when a connection is re-established.

The method may further comprise, in the event that there is not a match between the received identification data and locally stored identification data, generating device characterisation data by analysing the received identification data, storing the generated device characterisation data with the corresponding identification data, and transmitting the generated device characterisation data for use by the content server.

The method may further comprise transmitting the generated device characterisation and identification data to a plurality of identifying stations.

The method may further comprise validating the generated device characterisation data.

The content server may comprise a mobile content server, a mobile software application server, a mobile merchandising serving system or a mobile marketing software server.

The received device identification data may comprise User Agent, WAP Profile URI, or other device model information as may be available.

According to the invention, there is further provided an apparatus for identifying characteristics of a device, the device being arranged to request content from a content server, the apparatus comprising a storage unit configured to store local device identification and characterisation data, a network interface unit configured to transmit and receive data and a processing unit configured to compare device identification data generated by the device and received from the content server with local identification data stored in the storage unit and in response to a match between the received device identification data and the local identification data, to control the network interface unit to transmit data for use by the content server to identify characteristics of the device.

The processing unit may be further configured, in the event that there is not a match between the received identification data and locally stored identification data, to transmit the received identification data to a central identifying station, receive device identifying data and device characterisation data from the central station and transmit the received device characterisation data to the content server

According to the invention, there is also provided a system for identifying characteristics of a device, the device being arranged to request content from a content server, the system comprising a central identifying station and a plurality of local identifying stations, wherein each of the local identifying stations is arranged to receive identification data generated by the device from at least one content server to which the device is connected, to compare the received identification data with locally stored identification data and, in response to a match between the received identification data and the locally stored identification data, provide data for use by the content server to identify characteristics of the device, and, in the event that there is not a match between the received identification data and locally stored identification data, transmitting the received identification data to the central identifying station, receiving device identifying data and characterisation data from the central identifying station and transmitting the received characterisation data to the content server.

The central identification station may be arranged to receive the identification data from a local identifying station, compare the received identification data with locally stored identification data and, in response to a match between the received identification data and the locally stored identification data, provide data for use by the content server to identify characteristics of the device, and, in the event that there is not a match between the received identification data and locally stored identification data, determine characterisation data for the device for use by the content server to identify characteristics of the device.

The system may be arranged to transmit data between local identifying stations and a central identifying station via the internet.

Embodiments of the invention will now be described, by way of example, with reference to the accompanying drawings, in which:
Figure 1 schematically illustrates a system for providing content to a mobile device according to an embodiment of the present invention;
Figure 2 schematically illustrates a device identifying system according to an embodiment of the present invention connected to a plurality of content serving systems;
Figure 3 schematically illustrates the structure of each component of the device identifying system of Figure 2;
Figure 4 is a flow diagram illustrating the steps performed in providing content to a mobile device according to an embodiment of the invention;
Figure 5 is a flow diagram illustrating the steps performed in identifying a mobile device at a local identifying station according to an embodiment of the present invention;
Figure 6 is a flow diagram illustrating the steps performed in identifying a mobile device at a central device identifying station according to an embodiment of the present invention;
Figure 7 is a flow diagram illustrating the steps performed in searching an identification record stored at a local device identifying station or central device identifying station, according to an embodiment of the present invention;
Figure 8 is a flow diagram illustrating the steps performed in obtaining device characterisation data by analysis of header information in an identification request, according to an embodiment of the present invention; and
Figure 9 is a flow diagram illustrating the steps performed by a local identifying station in automatically contacting a central identifying station to request updated device identification data.

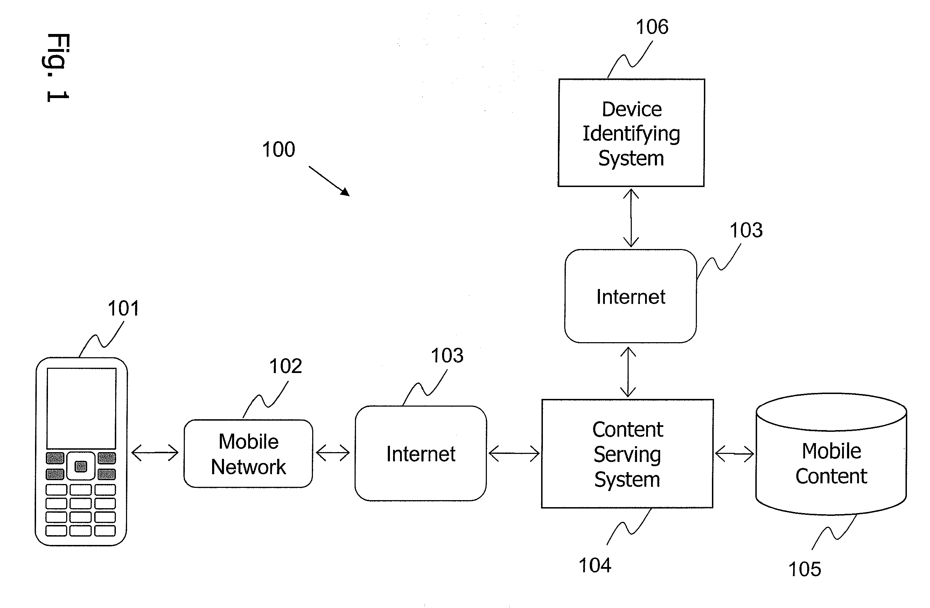

Referring to Figure 1, a system 100 for providing content to a mobile device according to an embodiment of the invention includes a communication device 101, in this example a mobile telephone, connected via a network 102 and the internet 103 to a content serving system 104. In the present example, the network 102 is a 3G mobile network via which a user of the mobile telephone 101 can access the internet 103. Other mobile networks and internet standards can additionally or alternatively be used in accordance with the invention, for instance a global system for mobile communications (GSM) network connecting the device to the internet using the general packet radio service (GPRS) in conjunction with the wireless application protocol (WAP).

The content serving system 104 is connected to a content store 105, in the present example a disk array, storing news reports and sports statistics to be provided to devices such as the mobile telephone 101. The content store 105 may be part of the content serving system 104 or located remotely from the content serving system 104 and connected to the content serving system 104, for instance via a network such as the internet.

The content serving system 104 is also connected to a device identifying system 106 via the internet 103.

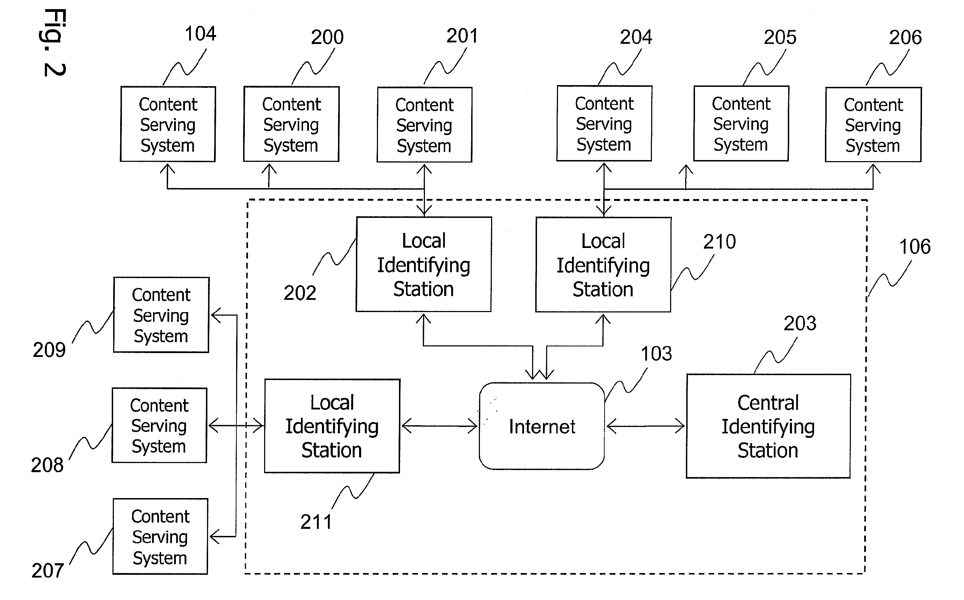

Figure 2 illustrates components of the device identifying system 106 according to an embodiment of the present invention. The content serving system 104 is one of a first group of content serving systems 104, 200, 201 connected, via the internet, to a first local identifying station 202 of the device identifying system 106. The first local identifying station 202 is, in turn, connected to a central identifying station 203 via the internet 103. Second and third groups of content serving systems 204 - 206, 207 - 209 are each respectively connected to second and third local identifying stations 210, 211 which are each also connected to the central identifying station 203 via the internet 103. In this embodiment, the connection between the local and central stations 202, 203, 210, 211 is shown to be via the internet 103, although alternative network connections may be substituted as appropriate.

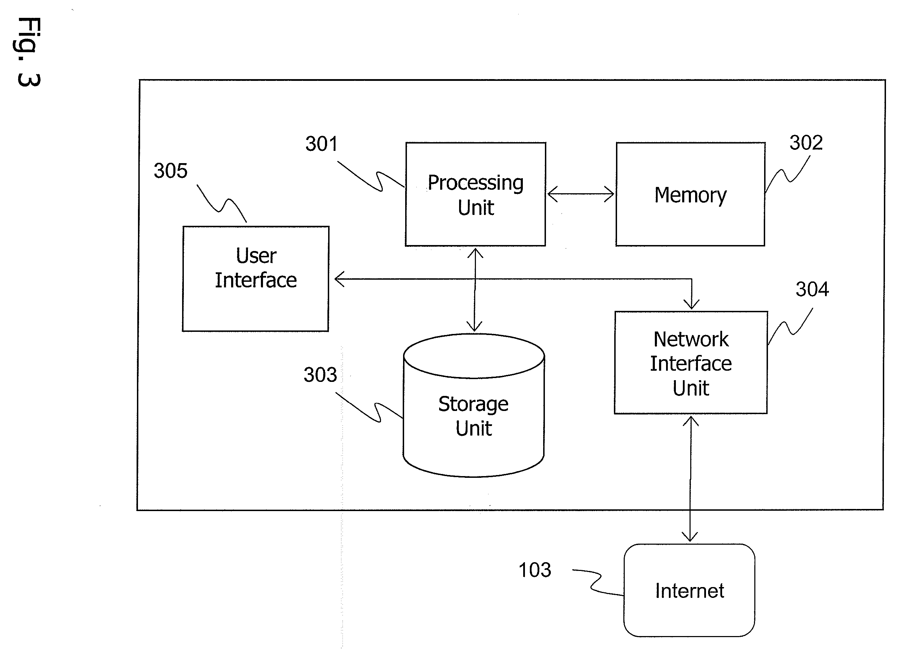

Figure 3 schematically illustrates the arrangement of components of the local and central identifying stations 202, 203 210, 211. Each of these has a general server configuration including a processing unit 301, memory 302, a storage unit 303 and a network interface unit 304 connected to the internet 103, although alternative networks could be substituted where appropriate, such as a local area network, wireless network etc. The identifying stations additionally include a user interface. This may comprise devices such as a monitor, keyboard and mouse, but in most instantiations, the user will interact with the system via a web browser on another device.

The local and central identifying stations 202, 203, 210, 211, according to embodiments of the invention provide statistics, upgrades and configuration options via the user interface 305, which may be provided via the internet as mentioned above.

In this embodiment, the storage unit 303 is a magnetic hard disk drive, although alternative forms of computer-readable memory may be used. The processing unit 301 is configured to control the network interface unit 304 to transmit and receive data and to control the storage unit 303 to both store data and retrieve stored data.

The storage unit 303 stores device characterisation data for use in identifying characteristics of communication devices, typically in the form of a repository comprising one or more entries of device information. Each entry in the repository contains identification data which can uniquely identify a given type of mobile device, in certain embodiments based on communication data generated by the device. The identification can include not only identifying each physical mobile model, but also identifying variants of the model such as specific versions and devices having variations of embedded software. The entries additionally contain characterisation data comprising information required to determine characteristics of the mobile device. Examples of characterisation data include but are not limited to the screen size, type of keyboard, numbers of colours the screen can render, the type of content that can be displayed within the browser, the type of application that may be downloaded, the codes generated by the keys on the device and whether the device has a touch-sensitive screen, although numerous other features or parameters of devices can be stored.

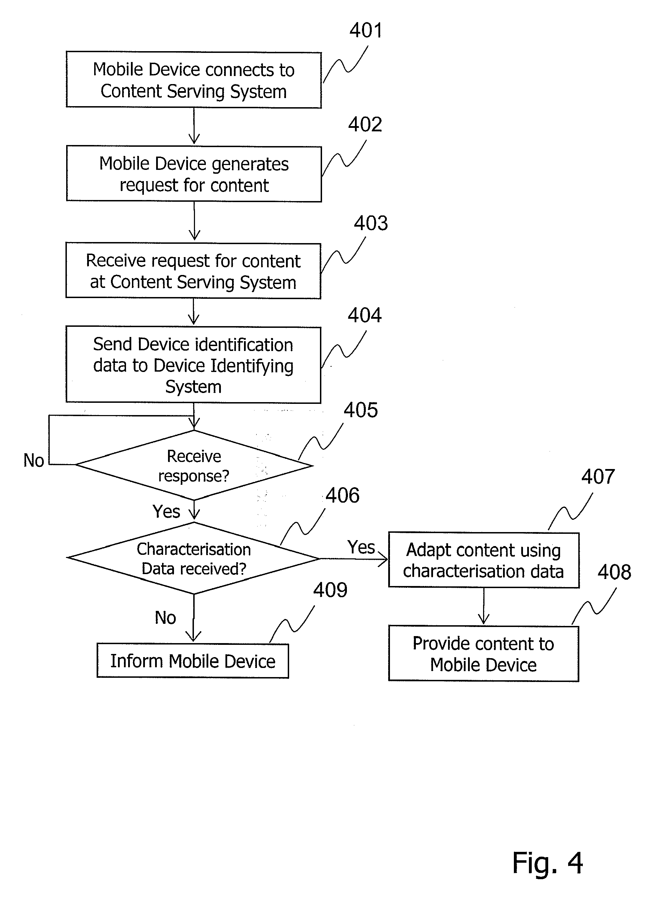

Figure 4 is a flow diagram illustrating the steps performed in providing content to a mobile device according to the invention. The mobile device connects to the content serving system 104 (step 401) and generates a request for content stored in the content store 105 (step 402). The request can, for instance, comprise a uniform resource locator (URL) corresponding to the required content entered into the mobile device 101 by a user of the device, or an alternative selection by the user of the appropriate content.

The request for content is received at the content serving system (step 403) and, based on the request, identification data generated by the device 101 during its connection to the content serving system 104 is sent to the device identifying system 106 (step 404). The identification data may typically be received via a web service, although alternative mechanisms may be used. The identification data may comprise header information generated during the connection of the mobile communication device 101 to the content serving system 104, typically headers from the Internet Protocol package, including User Agent and WAP Profile URI if present. Due to non-standards compliant gateways and other software existing in the communications path between the mobile communications device 101 and the mobile content serving system 104, these header fields may be renamed.

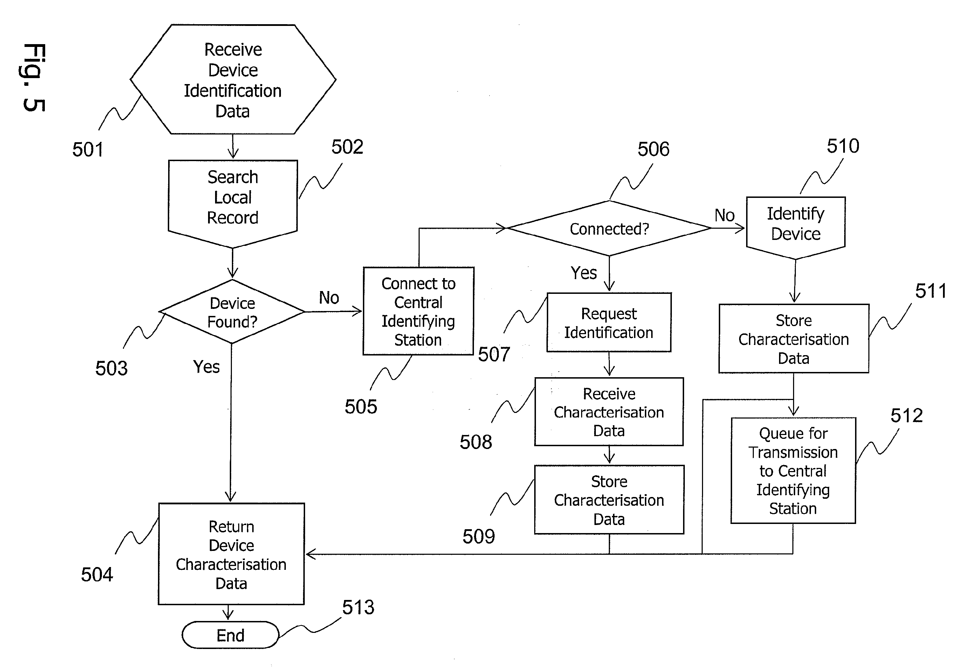

Figure 5 illustrates a method of identifying a device at a local identifying station 202 of the device identifying system 106, according to an embodiment of the invention.

The identification data is received at the first local identifying station 202 from the content serving system 104 (step 501). On receiving the identification data, the local identifying station 202 searches local records containing identification data and corresponding device characterisation data to find a record whose identification data matches the received identification data (step 502).

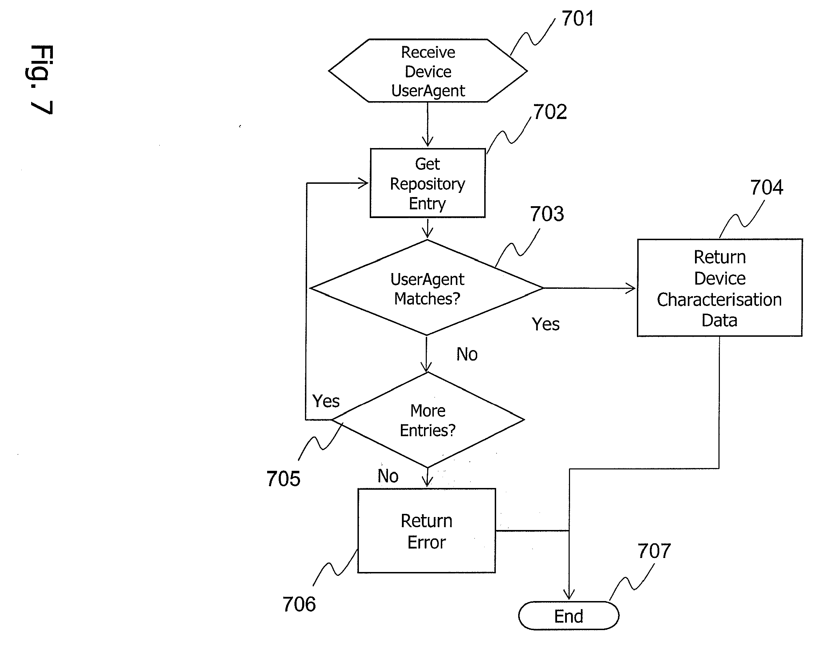

Figure 7 is a flowchart illustrating the steps executed by the local identifying station 202 in searching its repository for identification data matching received identification data. In this example, the identification data is the user agent provided by the mobile telephone 101 to the content serving system 104. The identifying station 202 receives device user agent (step 701), and retrieves an entry of identification data from the repository (step 702). The identifying station 202 then compares the received identification data with the locally retrieved identification data and determines whether there is a match (step 703). In the event that there is a match between the received identification data and the locally stored identification data, the identifying station 202 outputs the characterisation data stored in the matching record as the result of the search (step 704). In the event that there is not a match between the received identification data and the identification data in the retrieved record, the identifying station 202 checks to see if there are any more entries in the repository (step 705). If there are entries remaining which have not yet been compared against the received identification data, a further record is retrieved (step 702) and the comparison is performed again (step 703). In the event that no more entries remain, i.e. the entire repository has been searched, identification of the mobile device 101 fails and an error message is returned (step 706).

In the embodiment described in Figure 7, received user agent data is used to identify the mobile device, but those skilled in the art may readily substitute alternative forms of data suitable for identifying the device, including but not limited to User Agent, WAP Profile universal resource identifier (URI) or other device model data that is available.

Referring to Figure 5, once the search has been performed and it has been determined whether matching identification data is present (step 503), in the event that matching identification data is found, the associated device characterisation data is returned (step 504) to the source of the identification request, in this example content serving system 104. In the event that no matching identification data is found, the local identifying station 202 attempts to connect to the central identifying station 203 (step 505). It is determined whether a connection has been successfully made (step 506) and, if connection is successful, a request for identification of the device is transmitted to the central identifying station (step 507). This request includes the device identification data received at the local identifying station 202 from the content serving system 104, for instance the user agent of the mobile telephone 101. Device characterisation data is then received from the central identifying station (step 508) in response to the request, stored in the local repository (step 509) and returned to the source of the identification request (step 504).

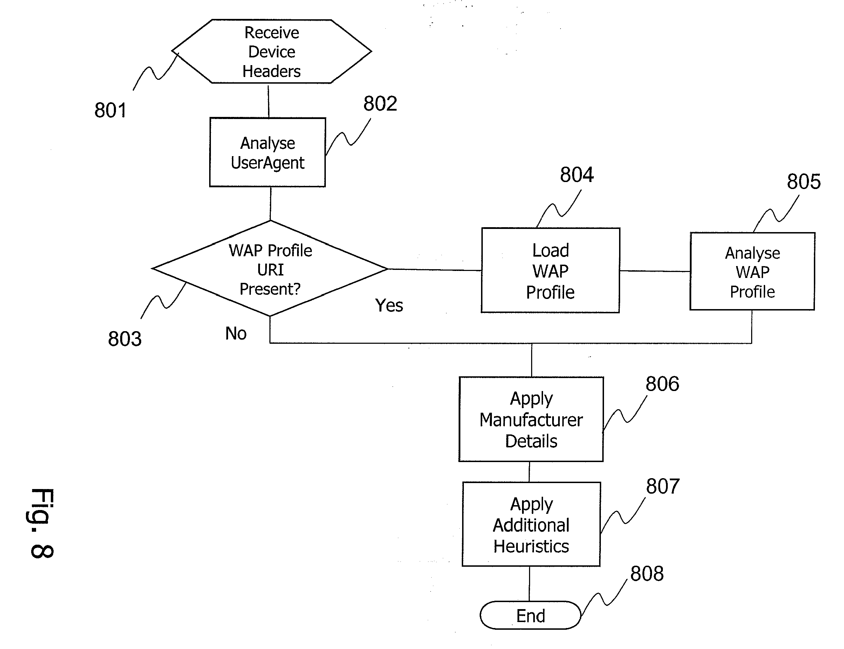

If connection to the central identifying station 203 is unsuccessful, characterisation data is automatically generated at the local identifying station 202 (step 510). Figure 8 is a flowchart illustrating the steps performed by the local identifying station 202 when generating device characterisation data. The local identifying station 202 receives, in the present example, device headers originating from the connection of the mobile telephone 101 to the content serving system 104. The user agent is determined from the received device headers and analysed (step 802). The station 202 then checks for WAP Profile URI data in the received device headers and determines whether such information is available (step 803). In the event that such information is not found, the station 202 proceeds to apply manufacturer details corresponding to the user agent (step 806) determined from a locally stored manufacturer details repository (not shown). The manufacturer details comprise characterisation information for user agents according to known manufacturer specifications. Additional heuristics are also applied (step 807) in order to determine further device characterisation information so as to further characterise the mobile device 101. Examples of this include, but are not limited to, partial matching of names, device series characteristics and implicitly gathered known features of certain device groups.

In the event that WAP Profile URI data is determined to be present (step 803), the local identifying station 202 loads the WAP profile (step 804) providing screen size, accepted media types, Java support levels, communications capabilities and other information which changes from device to device and analyses the profile (step 805) before applying the manufacturer details (step 806) and additional heuristics (step 807), accordingly enabling further characterisation data to be determined from the WAP profile.

Referring to Figure 5, the resulting automatically generated characterisation data is stored in the local repository (step 511). Optionally, this data may be queued for transmission to the central identifying station 203 on re-establishment of connection (step 512). In embodiments of the invention, the central identifying system 203 is arranged such that an operator is alerted that a local identifying station has automatically generated device characterisation data, the operator then being requested to validate the characterisation data. The characterisation data is returned to the source of the identification request (step 504), in the present example the content serving system 104.

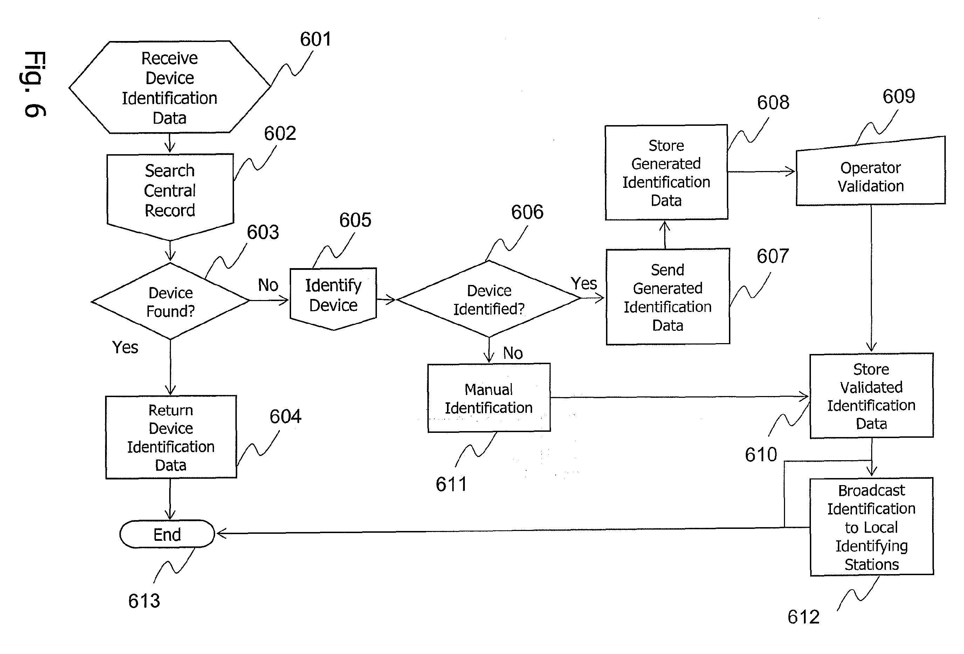

Figure 6 is a flowchart illustrating the steps executed by the central identifying station 203 in identifying device characterisation data for a mobile device 101, following a request provided by a local identifying station. Device identification data is received from a connected local identifying station 202 (step 601). A central repository of device identification data and corresponding characterisation data is searched (step 602) for identification data matching the received identification data. The steps performed in searching the central identification data repository correspond to those performed at the local identification station 202 in searching the local identification data repository as described above with reference to Figure 7. It is determined whether or not identification data has been found (step 603) and in the event that matching identification data is found, the associated device characterisation data is returned to the local identifying station (step 604).

In the event that no matching identification data is found, automatic device identification and generation of characterisation data is attempted (step 605). The steps performed in automatic device identification at the central identification station 203 correspond to those performed at the local identification station 202 as described above with reference to Figure 8.

In the event that device characterisation data is successfully generated, the characterisation data is transmitted to the local identifying station (step 607) and stored in the central repository (step 608). An operator is alerted that the station has automatically generated device characterisation data, the operator then being requested to validate the characterisation data (step 609). This step may involve the operator applying corrections to the generated data if required. Following validation of the generated characterisation data by the operator, the validated characterisation data is stored together with corresponding identification data in the central repository (step 610).

Alternatively, the attempt to automatically generate characterisation data may fail, in which case the central identifying station 203 is not able to identify the device. Typically, this may occur when a mobile communications device vendor fails to conform to standards or conventions, for instance with respect to the format of device identifying data such as the user agent or WAP profile URI. In this event, the central identifying station 203 informs the local identifying station 202 that the device cannot currently be identified, and the local identifying station 202 may then pass this message on to the source of the identification request.

In the present example, the central identifying station 203 requests an operator to manually enter and validate characterisation data for the unidentified mobile device (step 611), before storing the validated characterisation data in the central repository (step 610).

Following either of the steps of automatically generating characterisation data or requesting manual entry and validation of characterisation data, the central identifying station 203 can optionally transmit the validated data to any connected local identifying stations 202, 210, 211 (step 612), such that the local identifying stations can update their local repositories with identification and characterisation data corresponding to the new mobile device 101.

In the event that connection to a particular local identifying station fails, the central identification system 203 may repeatedly attempt to contact the local identifying station 202, 210, 211 until connection is successful and the updated data may be transmitted. If the option to transmit updated data to all local identifying stations is not chosen, the local identifying stations 202, 210, 211 may still receive the updated data at a time in the future when they encounter the same device and query the central identifying station 203.

Referring to Figure 4, once the device identification data has been sent to the device identifying system, it is determined whether a response is received by the content serving system 104 from the local identifying station 202 (step 405) and, if so, whether the response includes characterisation data (step 406). If so, the content requested by the mobile telephone 101 is adapted (step 407) according to the characterisation data and provided to the mobile device 101 (step 408). Alternatively, content that has been previously adapted or otherwise optimised for the identified mobile device 101 may be provided.

In the event that characterisation data is not provided, the mobile device is informed that the content cannot currently be provided, which may include advice for display to a user that they should contact their service provider for support.

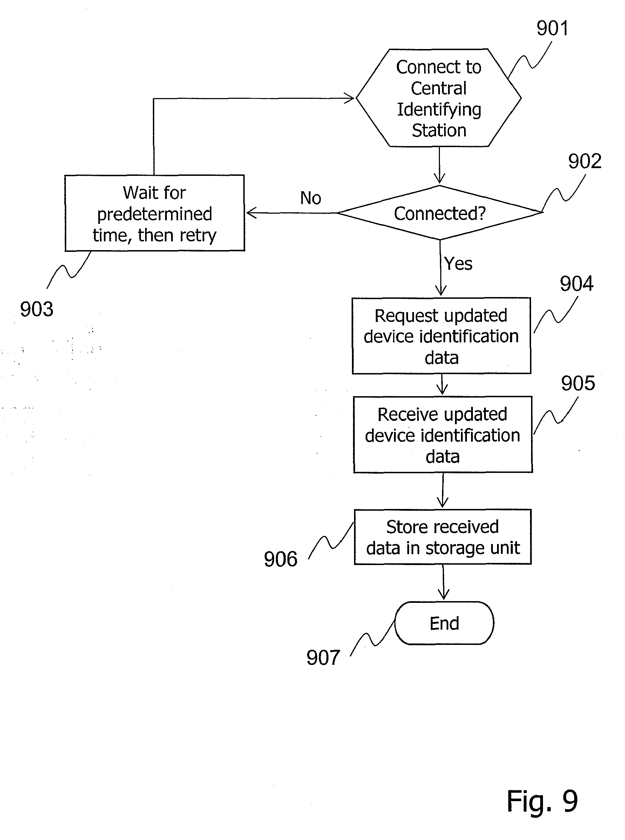

Figure 9 is a flowchart illustrating the process by which a local identifying station 202, 210, 211 may connect to a central identifying station 203 with the purpose of synchronising repositories. The local identifying station 202, 210, 211 attempts to connect to the central identifying station 203 (step 901), and it is determined whether connection has been successful (step 902). In the event that connection fails, the local identifying station 202, 210, 211 may wait a predetermined period before attempting to reconnect (step 903). In the event that connection is successful, the local station 202, 210, 211 transmits a request to the central station 203 for updated device identification data, wherein the updated data may comprise newly generated device characterisation data and associated identification data (step 904). The local station 202, 210, 211 then receives updated data from the central station 203 (step 905), and stores the received characterisation and identification data in the local repository in the storage unit (step 906). Local stations 202, 210, 211 may accordingly periodically synchronise their repositories with a central station 203, ensuring that each station in the device identification system 106 has access to updated data corresponding to new mobile devices.

Although various embodiments of the present invention have been described herein with reference to the Figures, those skilled in the art will appreciate that various modifications, additions and substitutions are possible, without departing from the scope of the invention as defined by the accompanying claims.

Whilst the content serving system has been described as providing news and sports statistics information, in other embodiments, the content serving system and content store can be arranged for alternative or additional purposes. For instance the content serving system and content store can be arranged to provide a mobile software application provisioning system storing and providing software components of a mobile software application, for example Java ME or BREW code. These components may be assembled to form a mobile software application adapted or selected for use on the mobile communication device 101 and delivered via the internet 103 to the wireless cellular phone network 102, and in turn to the mobile communications device 101.

Alternatively or additionally, a mobile merchandising download serving system may be provided, comprising a computer system connected to the internet and storing music, ringtones, videos and other merchandise on its disk drives. This merchandise is delivered via the internet 103 to the wireless cellular phone network 102, and in turn to the mobile communications device 101.

Alternatively, the content serving system and content store can be arranged to provide a mobile marketing software serving system comprising a computer system connected to the internet and storing adverts, messages, and other marketing assets on its disk drives. These assets are delivered via the internet 103 to the wireless cellular phone network 102, and in turn to the mobile communications device 101.

## Claims

1. Apparatus for identifying characteristics of a device, the device being arranged to request content from a content server, the apparatus comprising:
a storage unit configured to store local device identification and characterisation data;
a network interface unit configured to transmit and receive data; and
a processing unit configured to compare device identification data generated by the device and received from the content server with local identification data stored in the storage unit and in response to a match between the received device identification data and the local identification data, to control the network interface unit to transmit data for use by the content server to identify characteristics of the device.

2. Apparatus according to claim 1, wherein the processing unit is further configured, in the event that there is not a match between the received identification data and locally stored identification data, to transmit the received identification data to a central identifying station, receive device identifying data and device characterisation data from the central station and transmit the received device characterisation data to the content server.

3. A method of identifying characteristics of a device, the device being arranged to request content from a content server, the method comprising:
receiving identification data generated by the device from the content server, the identification data corresponding to the device;
comparing the received identification data with locally stored identification data; and
in response to a match between the received identification data and the locally stored identification data, providing data for use by the content server to identify characteristics of the device.

4. A method according to claim 3, wherein the data provided for use by the content server comprises characterisation data identifying characteristics of the device.

5. A method according to claim 3 or 4, further comprising:
in the event that there is not a match between the received identification data and locally stored identification data, transmitting the received identification data to a central identifying station, receiving device identifying data and device characterisation data from the central station and transmitting the received device characterisation data to the content server.

6. A method according to claim 5, further comprising, in the event that a transmission to the central identifying station fails:
generating device characterisation data by analysing the received identification data;
storing the generated device characterisation data with the corresponding identification data; and
transmitting the generated device characterisation data for use by the content server.

7. A method according to claim 6, further comprising transmitting the generated device characterisation and identification data to the central identifying station when a connection is re-established.

8. A method according to claim 3 or 4, further comprising, in the event that there is not a match between the received identification data and locally stored identification data:
generating device characterisation data by analysing the received identification data;
storing the generated device characterisation data with the corresponding identification data; and
transmitting the generated device characterisation data for use by the content server.

9. A method according to claim 6, 7 or 8, further comprising transmitting the generated device characterisation and identification data to a plurality of identifying stations.

10. A method according to any one of claims 6 to 9, further comprising validating the generated device characterisation data.

11. A method according to any one of claims 3 to 10, wherein the content server comprises a mobile content server, a mobile software application server, a mobile merchandising serving system or a mobile marketing software server.

12. A method according to any one of claims 3 to 11, wherein the received device identification data comprises User Agent, WAP Profile URI, or device model information.

13. A system for identifying characteristics of a device, the device being arranged to request content from a content server, the system comprising:
a central identifying station; and
a plurality of local identifying stations, wherein
each of the local identifying stations is arranged to receive identification data generated by the device from at least one content server to which the device is connected, to compare the received identification data with locally stored identification data and, in response to a match between the received identification data and the locally stored identification data, provide data for use by the content server to identify characteristics of the device, and, in the event that there is not a match between the received identification data and locally stored identification data, transmitting the received identification data to the central identifying station, receiving device identifying data and characterisation data from the central identifying station and transmitting the received characterisation data to the content server.

14. A system according to claim 13, wherein the central identification station is arranged to receive the identification data from a local identifying station, compare the received identification data with locally stored identification data and, in response to a match between the received identification data and the locally stored identification data, provide data for use by the content server to identify characteristics of the device, and, in the event that there is not a match between the received identification data and locally stored identification data, determine characterisation data for the device for use by the content server to identify characteristics of the device.

15. A system according to claim 13 or 14, wherein the system is arranged to transmit data between local identifying stations and a central identifying station via the internet.
